(19) Europäisches Patentamt European Patent Office Office européen des brevets

(11) **EP 3 503 419 B1**

(12) **EUROPEAN PATENT SPECIFICATION**

(45) Date of publication and mention of the grant of the patent:
**30.06.2021 Bulletin 2021/26**

(21) Application number: **17208757.9**

(22) Date of filing: **20.12.2017**

(51) Int Cl.:
***H04B 3/32*** *(2006.01)*

(54) **FULL-DUPLEX VECTOR PROCESSING**

VOLLDUPLEX-VEKTORVERARBEITUNG

TRAITEMENT VECTORIEL POUR DUPLEX INTEGRAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietor: **Nokia Solutions and Networks Oy 02610 Espoo (FI)**

(72) Inventors:
• **TSIAFLAKIS, Paschalis**
 **2018 Antwerp (BE)**
• **MAES, Jochen**
 **2018 Antwerpen (BE)**

(74) Representative: **IP HILLS NV
Hubert Frère-Orbanlaan 329
9000 Gent (BE)**

(56) References cited:
**EP-A1- 3 113 378     US-A1- 2013 215 935**

EP 3 503 419 B1

## Description

### Technical Field

The present disclosure generally relates to full-duplex communication. The present disclosure further relates to a communication arrangement that comprises a vectoring processor interfacing with a plurality of communication units supporting full-duplex bi-directional communication over respective transmission lines. More particular, the disclosure relates to the pre-compensation of downstream far end cross-talk, DS-FEXT, the post-compensation of upstream far end cross-talk, US-FEXT and the cancellation of near end cross-talk, NEXT, and the cancellation of echo, ECHO, by such a communication arrangement.

### Background

Current wired communication technologies such as VDSL, G.fast or coaxial cable-based communication technologies (DOCSIS) use half-duplex communication schemes. This means that parties at both ends of the wire cannot communicate simultaneously, both in time and frequency, over the same communication channel. Different solutions exist to provide the parties with simultaneous or quasi-simultaneous access to the communication medium. One solution is frequency-division multiplexing (FDD) where different carrier frequencies are assigned to the transmitter and receiver such that a party can transmit over one carrier frequency and at the same time receive over another carrier frequency. Another solution is time-division multiplexing (TDD) where a party transmits and receives within different allocated time slots. Both FDD, TDD or a combination of both results provide an emulation of full-duplex communication.

True full-duplex wired communication can theoretically double the bandwidth with respect to the existing half-duplex wired communication. Both the upcoming DSL based G.(mg)fast and cable based DOCSIS 3.1 wired communication protocols foresee for such full-duplex communication modes.

A problem with full-duplex communication is that near-end cross-talk (NEXT) and echo (ECHO) will have a much bigger impact on the signal quality and, therefore, proper NEXT- and ECHO-cancellation is needed. Currently, vectoring applied by a vectoring processor at the central office side of the transmission lines already allows centralized pre-compensation of downstream far-end cross-talk (DS-FEXT) and post-compensation of upstream far-end cross-talk (US-FEXT).

It remains an open question how the cross-talk cancellation and compensation will be implemented in full-duplex communication systems. For example, what processing tasks will be performed by the vectoring processor (VP) and what part will be done by the separate baseband transmission line processors, also referred to as the DSPs or Digital Signal Processors. There are multiple challenges in the design of the VP and DSPs. A first one is the dependency between the pre-coder matrix, the post-coder matrix and the NEXT-ECHO cancellation matrix. For certain VP architectures, the NEXT-ECHO cancellation matrix would depend on the precoder and the postcoder. As a result, the NEXT-ECHO cancellation matrix would have to be updated every time the pre- or postcoder matrix is updated. Particularly for large scale systems, this may become problematic. A second challenge is the interaction between the DSPs and the VP which defines the trade-off between the precision of the tone data and the VPs matrix coefficients and the overall performance.

US2013215935A1 discloses a system including a processor configured to receive a plurality of upstream pilot signals from a plurality of remote transceivers, respectively, in a time domain, determine channel coefficients based on the plurality of upstream pilot signals, determine filter coefficients based on the channel coefficients and to control transmission of the upstream pilot signals in the time domain to physical layers of a plurality of processing devices, the plurality of processing devices configured to communicate with the plurality of remote transceivers through the processor.

EP3113378A1 discloses a method for canceling crosstalk between lines in a DSL system. The method includes: obtaining an upstream signal that is sent by corresponding CPE and that is received by each CO, forming an upstream signal sequence including upstream signals of all COs, obtaining a downstream signal that is sent by each CO to the CPE corresponding to each CO, and forming a downstream signal sequence including downstream signals of all the COs; performing FEXT cancellation processing on the upstream signal sequence by using an FEXT cancellation coefficient sequence, to obtain a first signal sequence, and processing the downstream signal sequence by using a preconfigured joint upstream cancellation coefficient sequence, to determine NEXT signals in the upstream signals of all the COs; and performing NEXT cancellation processing on the first signal sequence by using the determined NEXT signals, to obtain a second signal sequence, and sending upstream signals in the second signal sequence to all the COs.

### Summary

It is an object of the present invention to provide a solution to the above challenges.

This object is achieved, according to a first aspect, by a vectoring processor for mitigating cross-talk; wherein the vectoring processor is configured to interface with a plurality of communication units supporting full-duplex bi-directional communication over respective transmission lines; wherein the vectoring processor is further configured to pre-compensate downstream tone data received from the communication units for downstream far end cross-talk, DS-FEXT thereby obtaining pre-compensated downstream tone data, and to supply the pre-compensated downstream tone data to the communication units for further transmission over the respective transmission lines; wherein the vectoring processor is further configured to receive from the communication units upstream tone data and associated delayed pre-compensated downstream tone data previously supplied by the vectoring processor, and to post-compensate the upstream tone data, with the delayed pre-compensated downstream tone data, for near end cross-talk, NEXT, and for upstream far end cross-talk, US-FEXT, thereby obtaining post-compensated upstream tone data, and to supply the post-compensated upstream tone data to the communication units for further demodulation by the communication units.

In other words, a vectoring processor is proposed that performs at least pre-compensation for DS-FEXT and post-compensation for both US-FEXT and NEXT. The vector processor takes as input, for the post-compensation of US-FEXT and NEXT, the upstream tone data that is received from each transmission line by the respective communication units and delayed pre-compensated downstream tone data. This delayed pre-compensated downstream tone data corresponds to the pre-compensated downstream tone data that is delayed by the delay of both the transmission pipeline and the reception pipeline. This way, the delayed pre-compensated downstream tone data corresponds to the downstream tone data that were concurrently transmitted with the upstream tone data. The delayed pre-compensated downstream tone data thus acted as disturber for the disturbed upstream tone data. Concurrently transmitted downstream and upstream tone data is to be understood as the delayed pre-compensated downstream data and the upstream tone data correspond to downstream and upstream DMT symbols concurrently transmitted over and received from the transmission lines respectively, and thus that are physically interfering with each other in full-duplex communication.

The pre-compensated tone data and not the tone data itself is thus stored in the communication units. It is an advantage that the communication units only need to store the pre-compensated tone data used by the communication unit and, as such, results in limited memory requirements for the communication units. It is a further advantage that ECHO cancellation may be performed based on a simple multiplication. If, on the other, the tone data would be stored, it would not be possible to perform ECHO cancellation by such a simple multiplication. A further advantage is that there is no need to provision a worst-case buffering memory within the vectoring processor. Furthermore, there is no need to provide communication means between the vectoring processor and the communication units for exchange of the actual delay applied by the communication units. Furthermore, the communication units know the actual delay incurred by the downstream and upstream tone data along the transmit and receive pipelines, and can thus delay appropriately the downstream tone data so as they are presented on the interface towards the vectoring processor simultaneously with the upstream tone data that are physically impacted by them.

A further advantage is that, by using delayed pre-compensated tone data instead of delayed tone data, the postcoder design that includes the US-FEXT post-compensation and NEXT cancellation, is made independent from the precoder design. This further allows performing the updating of the precoders and the postcoders at different moments in time. This further reduces the necessary memory needed to swap the precoders or postcoders with updated versions.

Another further advantage of performing the US-FEXT compensation and NEXT cancellation based on the delayed compensated tone data is that this data is already quantized according to the vectoring processor and, hence, according to the transmission line. As a consequence, the US-FEXT and NEXT post-compensation will have tone data as input which is inherently precise. This further improves the overall accuracy of vector processor's US-FEXT and NEXT post-compensation.

Advantageously, the received upstream tone data is already pre-processed by the communication units for echo-cancellation with the delayed pre-compensated downstream tone data. The communication units typically operate with larger precision than the vector processor. Therefore, by performing the echo cancellation in the communication units, a larger echo cancellation depth will be achieved. This further results in an improved dynamic range of the received signal because the residual echo will be smaller.

Alternatively, the vectoring processor itself is configured to process the upstream tone data for echo-cancellation with the delayed pre-compensated downstream tone data.

The vectoring processor may for example mitigate the DS-FEXT by means of a precoding matrix, mitigate the NEXT by means of a NEXT cancellation matrix and mitigate the US-FEXT by means of a US-FEXT postcoding matrix.

According to a first embodiment, the vectoring processor is further configured to apply the US-FEXT postcoding matrix to the upstream tone data thereby obtaining US-FEXT postcoded upstream tone data, and to apply the NEXT cancellation matrix to the delayed pre-compensated downstream tone data thereby obtaining NEXT cancellation tone data, and to combine the NEXT cancellation tone data with the US-FEXT postcoded upstream tone data to obtain the post-compensated upstream tone data.

In other words, NEXT cancellation and US-FEXT postcoding is performed in parallel before combining them together to obtain the post-compensated upstream tone data. With this design the ECHO and NEXT design are decoupled. It is thus an advantage that the DS-FEXT precoding matrix and the postcoding matrix that includes the US-FEXT post-compensation and NEXT cancellation are decoupled from one another because the NEXT cancellation matrix does not depend on the precoder. According to this embodiment, the US-FEXT postcoding matrix and NEXT cancellation matrix are still coupled.

According to an alternative second embodiment, the vectoring processor is further configured to apply the NEXT cancellation matrix to the delayed pre-compensated downstream tone data thereby obtaining NEXT cancellation tone data, and to combine the NEXT cancellation tone data with the upstream tone data thereby obtaining NEXT cancelled upstream tone data, and to apply the postcoding matrix to the NEXT cancelled upstream tone data to obtain the post-compensated upstream tone data.

In other words, the ECHO cancellation and NEXT cancellation are decoupled from one another. Also, the DS-FEXT precoding matrix and the postcoding matrix that includes the US-FEXT post-compensation and NEXT cancellation are decoupled from one another because the NEXT cancellation matrix does not depend on the DS-FEXT precoding matrix. The US-FEXT postcoding matrix and NEXT cancellation matrix are further also decoupled from one another. By this decoupling, the DS-FEXT precoding matrix, the US-FEXT postcoding matrix and NEXT cancellation matrix can be updated independently of each other.

According to a second aspect, the disclosure also relates to a communication arrangement comprising the vectoring processor according to the first aspect and a processor configured to determine the NEXT cancellation matrix and the US-FEXT postcoding matrix from channel state information.

This processor may then calculate the US-FEXT postcoding matrix from a channel matrix comprising coupling coefficients between upstream channel inputs and upstream channel outputs associated with the respective transmission lines.

Advantageously, the processor is further configured to calculate the NEXT cancellation matrix according to the above first embodiment from a channel state matrix comprising coupling coefficients between downstream channel inputs and upstream channel outputs associated with the respective transmission lines, and from the US-FEXT postcoding matrix.

Advantageously, the processor may be further configured to calculate the NEXT cancellation matrix according to the above second embodiment from a channel state matrix comprising coupling coefficients between downstream channel inputs and upstream channel outputs associated with the respective transmission lines.

The processor may also be configured to calculate the precoding matrix from a channel matrix comprising coupling coefficients between downstream channel inputs and downstream channel outputs associated with the respective transmission lines.

According to a second aspect, the disclosure relates to a communication unit that supports full-duplex bi-directional communication over a transmission line configured to interface with a vectoring processor for mitigating cross-talk. The communication unit is further configured to send downstream tone data to the vectoring processor for pre-compensation of downstream far end cross-talk, DS-FEXT and to receive thereupon from the vectoring processor pre-compensated downstream tone data for further transmission on the transmission line; and wherein the communication unit is further configured to store the pre-compensated downstream tone data thereby obtaining delayed pre-compensated downstream tone data and to send the delayed pre-compensated downstream tone data together with associated upstream tone data received from the transmission line to the vectoring processor for compensation of the upstream tone data for near end cross-talk, NEXT, and for upstream far end cross-talk, US-FEXT, and to receive thereupon from the vectoring processor post-compensated upstream tone data for further demodulation.

According to a third aspect, the disclosure relates to a communication arrangement comprising a plurality of the communication units according to the second aspect and the vectoring processor according to the first aspect.

## Brief Description of the Drawings

Fig. 1 illustrates a frequency domain signal processing diagram of tone data for a single carrier in a communication arrangement according to an embodiment of the invention; and

Fig. 2 illustrates a further detail of the signal processing diagram of Fig. 1 according to a further first embodiment of the invention; and

Fig. 3 illustrates a further detail of the signal processing diagram of Fig. 1 according to a further second embodiment of the invention; and

Fig. 4 illustrates a communication arrangement according to an embodiment of the invention connected to a plurality of subscribers over respective transmission lines; and

Fig. 5 illustrates an alternative for the signal processing diagram of Fig. 1 according an embodiment of the invention.

## Detailed Description of Embodiment(s)

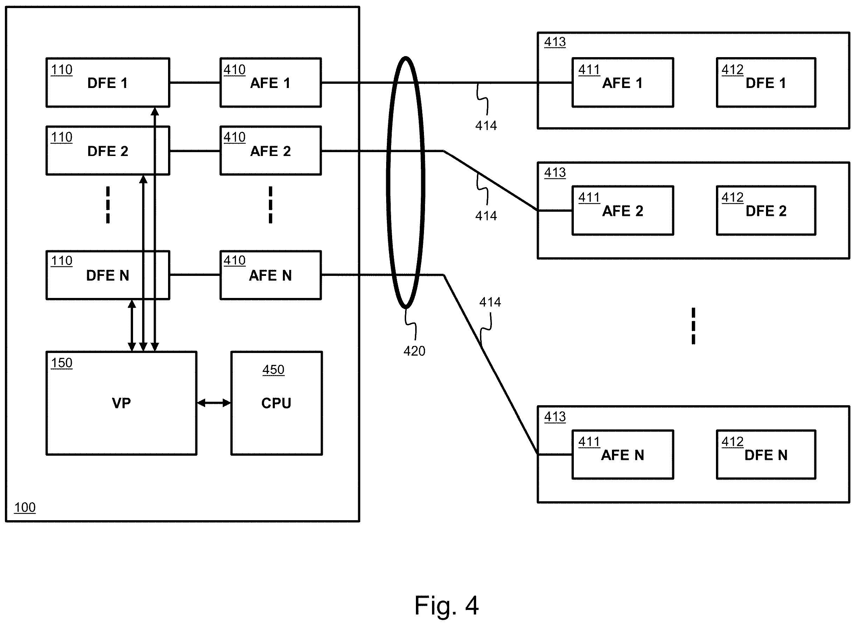

The present disclosure generally relates to a full-duplex vectoring processor. The present disclosure further relates to a communication arrangement that comprises such a vectoring processor and a plurality of communication units for full-duplex bi-directional communication over respective transmission lines. Fig. 4 illustrates an embodiment of such a communication arrangement 100 comprising a plurality of N digital front ends, DFEs 110, N analogue front ends, AFEs and a vectoring processor 150. Communication arrangement 100 may be connected to N respective communication lines 414. At the other end, the communication lines 414 may be connected to respective terminal nodes 413. A terminal node 413 comprises a similar AFE 411 and DFE 412. A DFE 110 and 412 comprises logic for discrete multi-tone modulation of digital payload data onto a multitude of K frequency carriers or tones and, vice versa, for discrete multi-tone demodulation of digital payload data from a multitude of K frequency carriers or tones. The frequency domain representation of data is further referred to as tone data within this disclosure. A DFE 110 and 412 further comprises logic for converting tone data to time domain data, i.e. to symbols, and vice versa, for converting time domain data to tone data. A DFE 110 and 412 may be implemented onto a digital signal processor, DSP. An AFE 410, 411 converts digitally represented time domain data to an analogue signal and transmits the analogue signal onto the respective transmission line 414. Vice versa, an AFE 410, 411, converts an analogue signal received from a respective transmission line 414 to a digitally represented time domain signal, i.e. symbol. As both arrangement 100 and terminal nodes 413 comprises both transmission and reception logic, they are both said to be configured for bi-directional communication. Communication arrangement 100 and terminal nodes 413 are further configured for full-duplex communication over the transmission lines 414. This means that both the arrangement and terminal nodes may transmit and receive signals at the same time and that both signals may comprise tone data at the same carrier frequencies.

Because transmission lines may exhibit cross-talk, for example because they are bundled together (420), signals transmitted simultaneously over different transmission lines 414 may disturb each other. Such cross-talk is defined as far end cross-talk or FEXT. FEXT affecting signals transmitted from the arrangement 100 to the subscribers 413, i.e. downstream signals, is further referred to as downstream far end cross-talk or DS-FEXT. Similarly, cross-talk affecting signals transmitted from the subscribers 413 to the arrangement 100, i.e. upstream signals, is further referred to as upstream far end cross-talk or US-FEXT. Furthermore, as the arrangement supports full duplex-communication, signals that are transmitted on one transmission line 414 will affect signals that are simultaneously received on another transmission line 414 at the same side of the transmission lines. This effect is further referred as near end cross-talk or NEXT. For compensation of the US-FEXT and DS-FEXT and cancellation of the NEXT, the arrangement 100 comprises a vectoring processor 150. How the compensation and cancellation is performed is described in more detail below. The communication arrangement 100 may further comprise a processor 450 for determining or updating a DS-FEXT pre-compensation matrix, a US-FEXT post-compensation matrix and a NEXT cancellation matrix for use by the vector processor for the respective compensation and cancellation. Processor 450 may be further configured to swap matrices used by the vector processor with updated versions. Alternatively, the processor 450 may also be provided as part of the vectoring processor 150.

Transmission lines 414 may correspond to Digital Subscriber Lines or DSL lines. Arrangement 100 may then correspond to a digital subscriber line access multiplexer, DSLAM, or a distribution point unit, DPU, and the terminal nodes 413 may then correspond to DSL modems. As arrangement 100 further supports full-duplex communication, it may be configured to operate in full-duplex according to the upcoming G.(mg)fast specification. Transmission lines 414 may also correspond to coaxial cables. Arrangement 100 may then correspond to a cable access node (cable AN) and the subscribers 413 may then correspond to cable modems. As arrangement 100 further supports full-duplex communication, it may be configured to operate in full-duplex as foreseen in the FDX DOCSIS 3.1 specification.

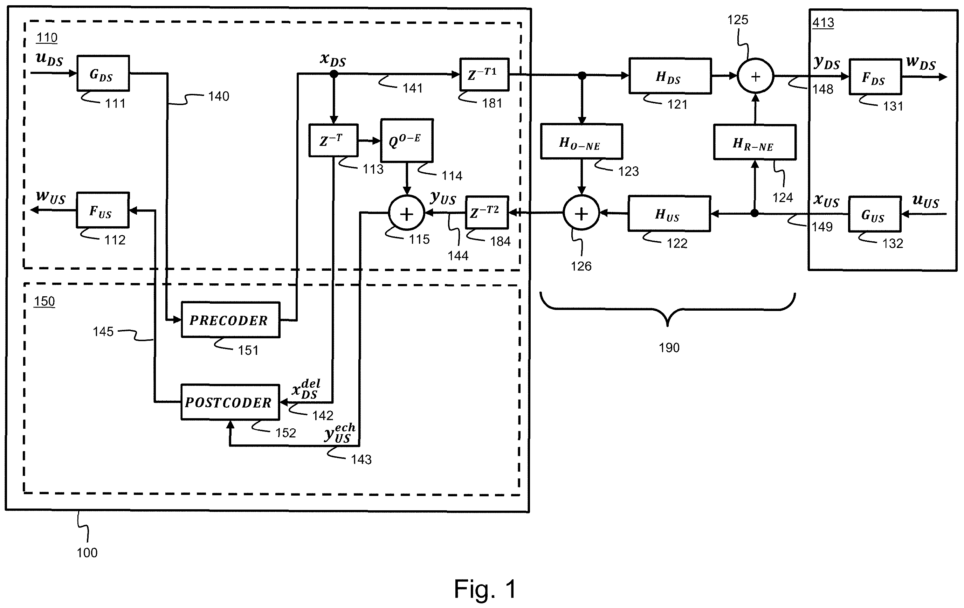

Fig. 1 illustrates a frequency domain representation of the communication arrangement 100, the transmission lines 414 and terminal nodes 413, according to an embodiment of the invention. More particular, Fig. 1 illustrates the processing components within the digital front end 110 and vector processor 150 needed for compensating US-FEXT and DS-FEXT and for NEXT and ECHO cancelation. The communication signals in Fig. 1 correspond to Nx1 tone data vectors which is the frequency domain representation of a single tone associated with each of the N transmission lines. The signal diagram thus only represents a single tone, and, therefore, is to be applicable for each of the K tones. All N transmission lines and associated transmission components for all N transmission lines are represented by channel model 190. For downstream communication, downstream tone data $x_{DS}$ (141) is transmitted from the arrangement 100 over the N transmission lines to the terminal nodes 413 and received as downstream tone data $y_{DS}$ (148) by the terminal nodes 413. For upstream communication, upstream tone data $x_{US}$ (149) is transmitted from the terminal nodes 413 and received as upstream tone data $y_{US}$ (144) by the communication units 110 of the communication arrangement 100. The DS-FEXT is represented by the NxN DS-FEXT channel matrix $H_{DS}$ (121). The US-FEXT is represented by the NxN upstream US-FEXT channel matrix $H_{US}$ (122). $H_{O\text{-}NE}$ (123) is the NxN ECHO and NEXT channel matrix at the side of the arrangement 100. $H_{O\text{-}NE}$ may further be decomposed as $H_{O\text{-}E}$ + $H_{O\text{-}N}$ wherein $H_{O\text{-}E}$ is the NxN diagonal ECHO channel matrix and $H_{O\text{-}N}$ is the NxN NEXT channel matrix. Similarly, $H_{R\text{-}NE}$ (124) is the NxN ECHO and NEXT channel matrix at the side of the terminal nodes 413.

The downstream pipeline in communication unit 110 of arrangement 100 starts with tone data $u_{DS}$ which corresponds to an Nx1 tone data vector, i.e. a frequency domain representation of a single tone that is to be transmitted over all transmission lines N. First, a scaling is performed by NxN diagonal matrix $G_{DS}$ of which the diagonal is populated with scaling factors. For the sake of simplicity, $G_{DS}$ is assumed to be an identity matrix such that output 140 of scaling operation 111 equals its input $u_{DS}$. Then, the input vector $u_{DS}$ is supplied by the communication units 110 to the vectoring processor 150, i.e. each unit 110 supplies its tone data to the vector processor 150. In the vectoring processor, the pre-compensated tone data $u_{DS}$ (140) is pre-compensated for DS-FEXT 121 by the precoder 151 thereby obtaining the pre-compensated tone data $x_{DS}$ (141). The pre-compensated tone data $x_{DS}$ (141) is received at the terminal nodes 413 as tone data $y_{DS}$ (148) for which DS-FEXT has already been compensated by precoder 151. Therefore, only a scaling operation is needed by the NxN diagonal matrix $F_{DS}$ of which the diagonal is populated with the scaling factors resulting in the output tone data $w_{DS}$.

Similarly, the upstream pipeline starts in the respective terminal nodes 413 with tone data $u_{US}$ which corresponds to an Nx1 tone data vector, i.e. a frequency domain representation of a single tone that is to be transmitted over the respective communication lines N. First, a scaling is performed by the NxN diagonal matrix $G_{US}$ (132) of which the diagonal is populated with scaling factors. For the sake of simplicity, $G_{US}$ is also assumed to be an identity matrix such that output $x_{US}$ (140) of scaling operation 132 equals its input $u_{DS}$. Tone data $x_{US}$ is then transmitted over the channel 190 and received at the arrangement 100 as tone data $y_{US}$ (144). Tone data $y_{US}$ will be affected by both US-FEXT 122 and ECHO/NEXT 123.

Due to the processing delays in both the transmission and reception pipelines, tone data $x_{DS}$ will have a delay before being transmitted as communication signals onto the N communication lines. Similarly, received communication signals will have a delay before appearing as tone data $y_{US}$ (144). These delays are modeled by the respective delay blocks 181 and 184 wherein the transmission pipeline exhibits a delay T1 and reception pipeline exhibits a delay T2.

In the upstream reception pipeline, ECHO cancellation is performed by subtracting (115) a delayed (113) and scaled (114) version of the transmitted pre-compensated tone data $x_{DS}$ (141). The delaying of the pre-compensated tone data $x_{DS}$ (141) is performed within the respective communication unit 110 by the storage block 113 thereby obtaining the delayed pre-compensated tone data $x_{DS}^{del}$ (142). The delay T is chosen such that it equals the sum of the downstream pipeline delay 181 and upstream pipeline delay 184, i.e. $T = T1 + T2$. The delayed pre-compensated tone data $x_{DS}^{del}$ (142) is then scaled by a 1x1 ECHO cancellation scaling factor $Q^{O\text{-}E}$ (114), which is then subtracted (115) from the upstream tone data $y_{US}$ (144) thereby obtaining the echo-cancelled upstream tone data $y_{US}^{ech}$ (143).

The communication units then supply both the delayed pre-compensated tone data $x_{DS}^{del}$ (142) and the echo-cancelled upstream tone data $y_{US}^{ech}$ (143) to the vectoring processor 150. A postcoder 152 in the vectoring processor then performs the NEXT cancellation and US-FEXT post-compensation based on the delayed pre-compensated tone data $x_{DS}^{del}$ (142) and the echo-cancelled upstream tone data $y_{US}^{ech}$ (143) thereby obtaining post-compensated tone data 145. The post-compensated tone data (145) is supplied to the communication units and then further scaled by NxN diagonal scaling matrix $F_{US}$ (112) thereby obtaining the upstream post-compensated tone data $w_{US}$. For the sake of simplicity, similar to scaling matrix 111, also matrix $F_{US}$ (112) is assumed to be an identity matrix such that the postcoder's (152) output 145 equals the upstream post-compensated tone data $w_{US}$.

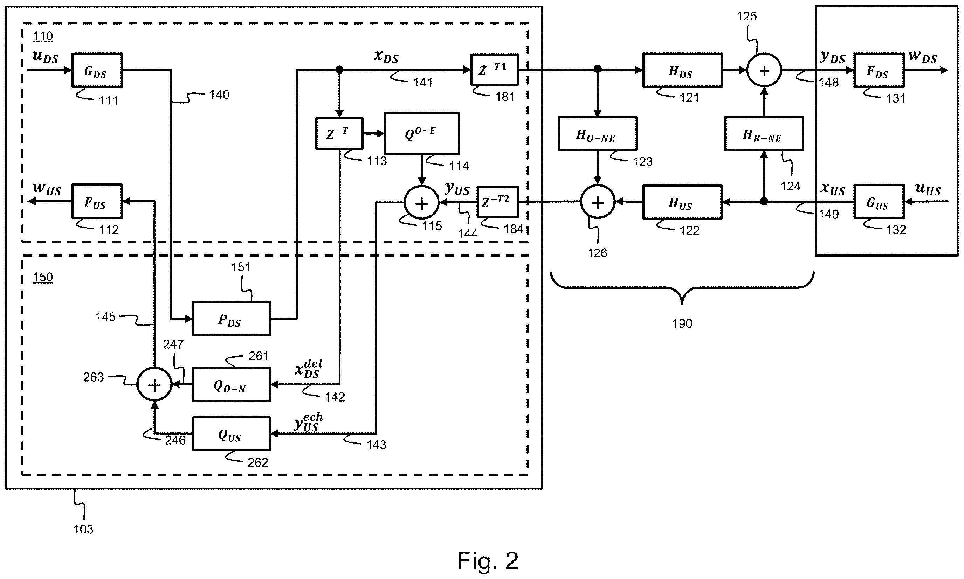

Two further embodiments will now be described for determination of the precoder 151, the postcoder 152 and the echo cancellation matrix 114. Fig. 2 illustrates the first further embodiment with reference signs to Fig. 1 where the components and signals are identical. In Fig. 2, the details of the processing blocks in the vectoring processor 150 are further shown. The precoding is performed by an NxN precoding matrix $P_{DS}$ (151) such that $x_{DS} = P_{DS}u_{DS}$. The precoding matrix may be calculated as $P_{DS} = H_{DS}^{-1}$. The channel matrix $H_{DS}$ may be obtained by known methods, e.g. by channel measurements or tracking.

For the calculation of the ECHO cancellation matrix $Q^{O\text{-}E}$ (114), the received upstream data $y_{US}$ (144) may be written as

$$y_{US} = H_{O-E}x_{DS}^{del} + H_{O-N}x_{DS}^{del} + H_{US}u_{US} + z_{US}$$

wherein $z_{US}$ is the upstream noise. The echo cancelled upstream tone data 143 may then be written as:

$$y_{US}^{ech} = y_{US} + Q_{O-E}x_{DS}^{del}$$
$$= H_{O-N}x_{DS}^{del} + H_{US}u_{us} + z_{US}$$

wherein the ECHO cancellation matrix $Q^{O-E}$ is calculated as:

$$Q^{O-E} = -H_{O-E}$$

Again, the ECHO channel matrix at the side of the arrangement 100 may be obtained by known channel estimation or tracking methods.

For the postcoding, the vectoring processor 150 applies a US-FEXT postcoding matrix $Q_{US}$ (262) to the echo-cancelled upstream tone data $y_{US}^{ech}$ (143) thereby obtaining US-FEXT postcoded upstream tone data 246, and applies a NEXT cancellation matrix $Q_{O-N}$ (261) to the delayed pre-compensated downstream tone data (142) thereby obtaining NEXT cancellation tone data 247. The NEXT cancellation tone data 247 is then added to the US-FEXT postcoded upstream tone data (246) thereby obtaining the post-compensated upstream tone data $w_{US}$ (145). The postcoder may be written by the following equation:

$$w_{US} = [Q_{US} \quad Q_{O-N}]\begin{bmatrix} y_{US}^{ech} \\ x_{DS}^{del} \end{bmatrix}$$
$$= Q_{US}y_{US}^{ech} + Q_{O-N}x_{DS}^{del}$$
$$= Q_{US}H_{O-N}x_{DS}^{del} + Q_{US}H_{US}u_{US} + Q_{US}z_{US} + Q_{O-N}x_{DS}^{del}$$

wherein $Q_{O-N}$ and $Q_{US}$ are calculated as:

$$Q_{O-N} = -Q_{US}H_{O-N}$$

$$Q_{US} = H_{US}^{-1}$$

such that:

$$[Q_{US} \quad Q_{O-N}]\begin{bmatrix} y_{US}^{ech} \\ x_{DS}^{del} \end{bmatrix} = u_{US} + H_{US}^{-1}z_{US}$$

In other words, the NEXT cancellation matrix $Q_{O-N}$ (261) is calculated from the channel state matrix $H_{O-N}$ that comprises coupling coefficients between the downstream channel inputs $x_{DS}^{del}$ (141) and the upstream channel outputs $y_{US}$ (144) associated with the respective transmission lines, and from the US-FEXT postcoding matrix $Q_{US}$ (122). The calculation of the postcoder 151 is thus independent of the calculation of the precoder $P_{DS}$. Therefore, changes to the precoder 151 do not necessitate changes to the postcoder 152. On the other hand, the calculation of the NEXT cancellation matrix $Q_{O-N}$ is coupled to the calculation of the US-FEXT postcoding matrix $Q_{US}$. Therefore, an update of the US-FEXT postcoding matrix $Q_{US}$ necessitates an update of the NEXT cancellation matrix

$$Q_{O-N} = -Q_{US}H_{O-N}.$$

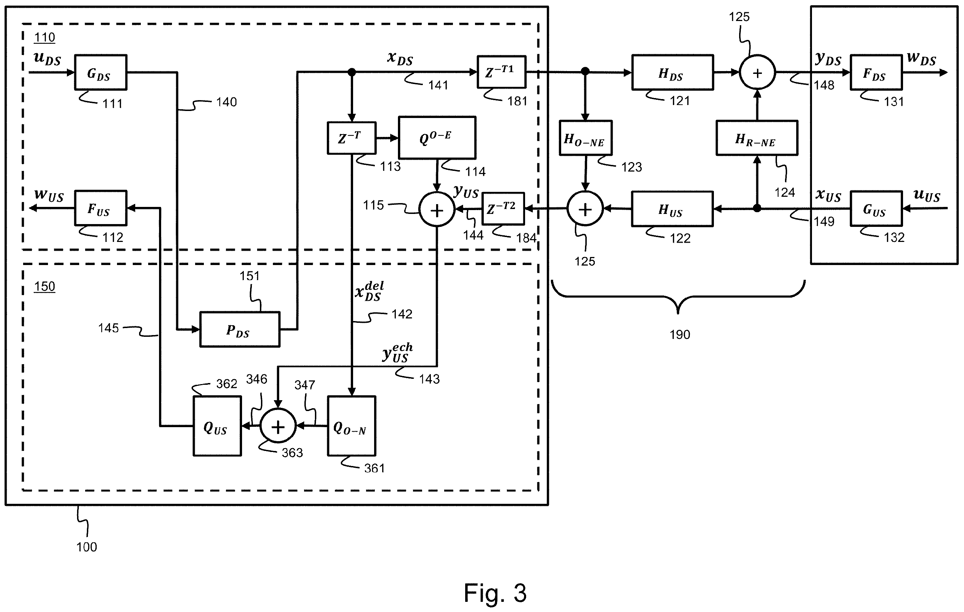

Fig. 3 illustrates the second further embodiment with reference signs to Fig. 1 where the components and signals are identical. In Fig. 3, the details of the processing blocks in the vectoring processor 150 are further shown. The precoding is performed by a precoding matrix $P_{DS}$ (151) such that $x_{DS} = P_{DS}u_{DS}$. The precoding matrix may be calculated as $P_{DS} = H_{DS}^{-1}$. The channel matrix $H_{DS}$ may be obtained by known methods, e.g. by channel measurements or tracking.

For the calculation of the ECHO cancellation matrix $Q^{O-E}$, the received upstream data $y_{US}$ (144) may be written as

$$y_{US} = H_{O-E}x_{DS}^{del} + H_{O-N}x_{DS}^{del} + H_{US}u_{US} + z_{US}$$

wherein $z_{US}$ is the upstream noise. The echo cancelled upstream tone data 143 may then be written as:

$$y_{US}^{ech} = y_{US} + Q_{O-E}x_{DS}^{del}$$
$$= H_{O-N}x_{DS}^{del} + H_{US}u_{us} + z_{US}$$

wherein the ECHO cancellation matrix $Q^{O-E}$ is calculated as:

$$Q^{O-E} = -H_{O-E}$$

Again, the ECHO channel matrix at the side of the arrangement 100 may be obtained by known channel estimation or tracking methods.

For the postcoding, the vectoring processor 150 applies a NEXT cancellation matrix $Q_{O-N}$ (361) to the delayed pre-compensated downstream tone data $x_{DS}^{del}$ (142) thereby obtaining NEXT cancellation tone data (347), and combines (363) the NEXT cancellation tone data (347) with the echo-cancelled upstream tone data $y_{US}^{ech}$ (143) thereby obtaining NEXT cancelled upstream tone data (346), and then applies the postcoding matrix $Q_{US}$ (362) to the NEXT cancelled upstream tone data (346) to obtain the post-compensated upstream tone data $w_{US}$ (145). The NEXT cancelled upstream tone data $y'^{ech}_{US}$ (346) may then written as:

$$y'^{ech}_{US} = y_{US}^{ech} + Q_{O-N}x_{DS}^{del}$$
$$= H_{O-N}x_{DS}^{del} + H_{US}u_{US} + z_{US} + Q_{O-N}x_{DS}^{del}$$

wherein $Q_{O-N}$ is calculated as:

$$Q_{O-N} = -H_{O-N}$$

such that:

$$y'^{ech}_{US} = H_{US}u_{US} + z_{US}$$

and thus:

$$w_{US} = Q_{US}y'^{ech}_{US} = u_{US} + H^{-1}_{US}z_{US}$$

wherein $Q_{US}$ is calculated as:

$$Q_{US} = H^{-1}_{US}$$

In other words, the NEXT cancellation matrix $Q_{O\text{-}N}$ (361) is calculated from a channel state matrix $H_{O\text{-}N}$ comprising coupling coefficients between downstream channel inputs $x^{del}_{DS}$ (141) and the upstream channel outputs $y_{US}$ (144) associated with the respective transmission lines. The calculation of the postcoder 151 is thus independent of the calculation of the precoder $P_{DS}$. Therefore, changes to the precoder 151 do not necessitate changes to the postcoder 152. Furthermore, the calculation of the NEXT cancellation matrix $Q_{O\text{-}N}$ (361) is not coupled to the calculation of the US-FEXT postcoding matrix $Q_{US}$ (362). Therefore, an update of the US-FEXT postcoding matrix $Q_{US}$ does not necessitate an update of the NEXT cancellation matrix $Q_{O\text{-}N} = -H_{O\text{-}N}$.

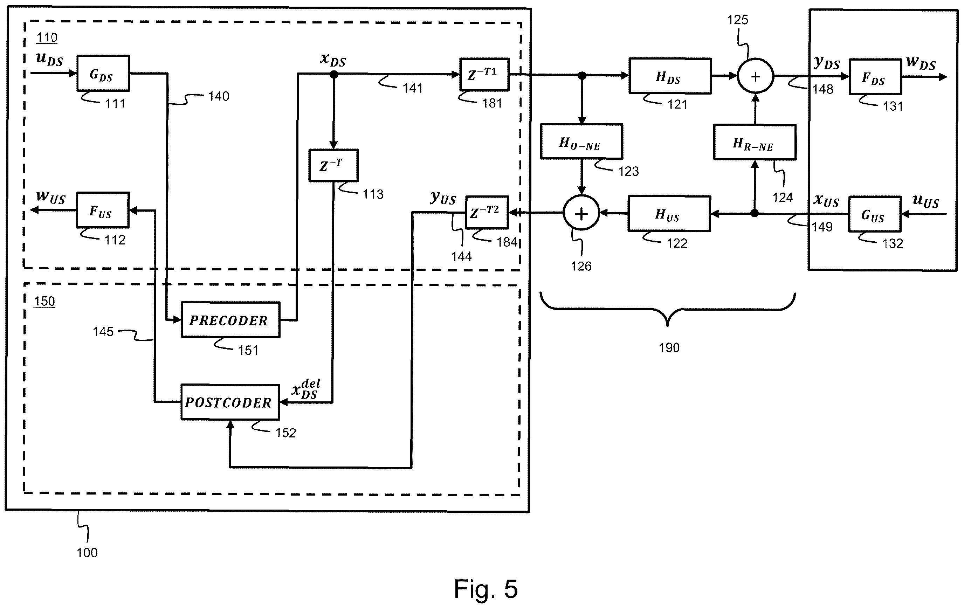

Fig. 5 illustrates a frequency domain representation of the communication arrangement 100, the transmission lines 414 and terminal nodes 413, according to an embodiment of the invention as an alternative to the embodiment of Fig. 1. The difference with Fig. 1 is that the ECHO cancellation is now performed within the vectoring processor 150 instead of the separate communication units 110. Therefore, the scaling operation will not be performed by separate scalar operations within the respective communication units 110 but is incorporated within the NEXT cancellation matrix which may then be defined as a NEXT-ECHO cancellation matrix. When applying the post-compensation as in Fig. 2, the NEXT cancellation matrix $Q_{O\text{-}N}$ (261) of Fig. 2 is replaced by a NEXT-ECHO cancellation matrix $Q_{O\text{-}NE}$ which may be obtained by the following equation:

$$Q_{O-NE} = -Q_{US}H_{O-NE}$$

When applying the post-compensation as in Fig. 3, the NEXT cancellation matrix $Q_{O\text{-}N}$ (361) of Fig. 3 then becomes a NEXT-ECHO cancellation matrix $Q_{O\text{-}NE}$ which may be obtained by the following equation:

$$Q_{O-NE} = -H_{O-NE}$$

The precoder 151 and postcoder 152 may further be obtained as described above with references to Fig. 2 or 3.
The ECHO- and NEXT cancellation matrices 114, 261, 361, the DS-FEXT precoding matrix 151 and the US-FEXT postcoding matrix 262, 362 may further be calculated by processing unit (CPU) 450 as shown in Fig. 4. CPU 450 may be located outside of the vectoring processor 150 within communication arrangement 100. Alternatively, CPU 450 may be an integral part of the vectoring processor 150. CPU 450 may also be located outside of communication arrangement 100, for example in an upstream location more closely to the central office. Alternatively, the ECHO- and NEXT cancellation matrices 114, 261, 361, the DS-FEXT precoding matrix 151 and the US-FEXT postcoding matrix 262, 362 may also be calculated on a decentralized computing system such as a cloud computing environment. The updated ECHO- and NEXT cancellation matrices 114, 261, 361, the DS-FEXT precoding matrix 151 and the US-FEXT postcoding matrix 262, 362 may then be stored in a memory of the vectoring processor and swapped with the current matrices in between calculations of the vectoring processor 150.
For the vectoring processor 150 of Fig. 2, the processor will update $Q_{O\text{-}N}$ and $Q_{US}$ at the same time when an updated estimation of $H_{US}$ is available as follows:

$$Q_{O-N} = -Q_{US}H_{O-N}$$

$$Q_{US} = H^{-1}_{US}$$

As $Q_{O\text{-}N}$ and $Q_{US}$ are coupled, the processor will then store both updated $Q_{O\text{-}N}$ and $Q_{US}$ and, thereafter, swap them with the current version of $Q_{O\text{-}N}$ and $Q_{US}$. When an updated version of $H_{O\text{-}N}$ is available, the processor 450 may update $Q_{O\text{-}N} = -Q_{US}H_{O\text{-}N}$ separately and swap it with the current version.

For the vectoring processor 150 of Fig. 3, the processor may update either $\boldsymbol{Q_{O\text{-}N}}$ or $\boldsymbol{Q_{US}}$ when an updated estimation of either $\boldsymbol{H_{O\text{-}N}}$ or $\boldsymbol{H_{US}}$ is available as follows:

$$Q_{O-N} = -H_{O-N}$$

$$Q_{US} = H_{US}^{-1}$$

As $\boldsymbol{Q_{O\text{-}N}}$ and $\boldsymbol{Q_{US}}$ are decoupled, the processor will then store both the updated $\boldsymbol{Q_{O\text{-}N}}$ or $\boldsymbol{Q_{US}}$ and, swap them with the respective current version.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A vectoring processor (150) for mitigating cross-talk (121, 122, 123); wherein the vectoring processor is configured to interface with a plurality of communication units (110) supporting full-duplex bi-directional communication over respective transmission lines (414); wherein the vectoring processor is further configured to pre-compensate (151) downstream tone data (140) received from the communication units for downstream far end cross-talk, DS-FEXT (121) thereby obtaining pre-compensated downstream tone data (141), and to supply the pre-compensated downstream tone data to the communication units (110) for further transmission over the respective transmission lines; wherein the vectoring processor is further configured to receive from the communication units upstream tone data (143, 144) and associated delayed pre-compensated downstream tone data (142) previously supplied by the vectoring processor, and to post-compensate (152) the upstream tone data, with the delayed pre-compensated downstream tone data, for near end cross-talk, NEXT (123), and for upstream far end cross-talk, US-FEXT (122), thereby obtaining post-compensated upstream tone data (145), and to supply the post-compensated upstream tone data to the communication units for further demodulation.

2. The vectoring processor (150) according to claim 1, wherein the received upstream tone data (143) is pre-processed (115) by the communication units for echo-cancellation with the delayed pre-compensated downstream tone data (142).

3. The vectoring processor (150) according to claim 1 further configured to process the upstream tone data (144) for echo-cancellation with the delayed pre-compensated downstream tone data.

4. The vectoring processor (150) according to claim 1 wherein the delayed pre-compensated downstream tone data (142) corresponds to pre-compensated downstream tone data (141) delayed by a transmission pipeline delay (181) and a reception pipeline delay (184) such that the delayed pre-compensated downstream tone data and the upstream tone data (143) corresponds to upstream and downstream tone data concurrently transmitted over the transmission lines.

5. The vectoring processor (150) according to any one of the preceding claims further configured to mitigate the DS-FEXT by means of a precoding matrix (151).

6. The vectoring processor (150) according to any one of claims 1 to 5 further configured to mitigate the NEXT (123) by means of a NEXT cancellation matrix (261, 361) and to mitigate the US-FEXT by means of a US-FEXT postcoding matrix (262, 362).

7. The vectoring processor (150) according to claim 6 further configured to apply the US-FEXT postcoding matrix (262) to the upstream tone data (143) thereby obtaining US-FEXT postcoded upstream tone data (246), and to apply the NEXT cancellation matrix (261) to the delayed pre-compensated downstream tone data (142) thereby obtaining NEXT cancellation tone data (247), and to combine the NEXT cancellation tone data (247) with the US-FEXT postcoded upstream tone data (246) to obtain the post-compensated upstream tone data (145).

8. The vectoring processor (150) according to claim 6 further configured to apply the NEXT cancellation matrix (361) to the delayed pre-compensated downstream tone data (142) thereby obtaining NEXT cancellation tone data (347), and to combine the NEXT cancellation tone data (347) with the upstream tone data (143) thereby obtaining NEXT cancelled upstream tone data (346), and to apply the US-FEXT postcoding matrix (362) to the NEXT cancelled upstream tone data (346) to obtain the post-compensated upstream tone data (145).

9. A communication arrangement (100) comprising the vectoring processor (150) according to any one of claims 6 to 8 and a processor (450) configured to determine the NEXT cancellation matrix (261, 361) and the US-FEXT postcoding matrix (262, 362) from channel state information.

10. The communication arrangement (100) according to claim 9 wherein the processor (450) is further configured to calculate the US-FEXT postcoding matrix (262) from a channel matrix (121) comprising coupling coefficients between upstream channel inputs (149) and upstream channel outputs (144) associated with the respective transmission lines.

11. The communication arrangement (100) according to claim 9 or 10 as long as dependent on claim 7 wherein the processor (450) is further configured to calculate the NEXT cancellation matrix (261) from a channel state matrix (123) comprising coupling coefficients between downstream channel inputs (141) and upstream channel outputs (144) associated with the respective transmission lines, and from the US-FEXT postcoding matrix.

12. The communication arrangement (100) according to claim 9 or 10 as long as dependent on claim 8 wherein the processor (450) is further configured to calculate the NEXT cancellation matrix (361) from a channel state matrix comprising coupling coefficients between downstream channel inputs (141) and upstream channel outputs (144) associated with the respective transmission lines.

13. The communication arrangement (100) according to claim 10 and any one of claims 6 to 9 wherein the processor (450) is further configured to calculate the precoding matrix (151) from a channel matrix (122) comprising coupling coefficients between downstream channel inputs (141) and downstream channel outputs (148) associated with the respective transmission lines.

14. A communication unit (110) supporting full-duplex bi-directional communication over a transmission line (414) configured to interface with a vectoring processor (150) for mitigating cross-talk; wherein the communication unit is further configured to send downstream tone data (140) to the vectoring processor for pre-compensation of downstream far end cross-talk, DS-FEXT (121) and to receive thereupon from the vectoring processor pre-compensated downstream tone data (141) for further transmission on the transmission line; and wherein the communication unit is further configured to store the pre-compensated downstream tone data thereby obtaining delayed pre-compensated downstream tone data (142) and to send the delayed pre-compensated downstream tone data together with associated upstream tone data (143, 144) received from the transmission line to the vectoring processor for compensation of the upstream tone data for near end cross-talk, NEXT (123), and for upstream far end cross-talk, US-FEXT (122), and to receive thereupon from the vectoring processor post-compensated upstream tone data (145) for further demodulation.

15. A communication arrangement (100) comprising a plurality of the communication units according to claim 14 and the vectoring processor according to any one of claims 1 to 13.

**Patentansprüche**

1. Vektorisierungsprozessor (150) zum Abschwächen von Übersprechen (121, 122, 123); wobei der Vektorisierungsprozessor dazu ausgelegt ist, sich an eine Vielzahl von Kommunikationseinheiten (110) anzubinden, die eine bidirektionale Vollduplexkommunikation über jeweilige Übertragungsleitungen (414) unterstützen; wobei der Vektorisierungsprozessor ferner dazu ausgelegt ist, stromabwärtige Tondaten (140), die von den Kommunikationseinheiten empfangen werden, für ein stromabwärtiges Fernübersprechen, DS-FEXT (121) vorzukompensieren (151), wodurch vorkompensierte stromabwärtige Tondaten (141) erhalten werden, und die vorkompensierten stromabwärtigen Tondaten zur weiteren Übertragung über die jeweiligen Übertragungsleitungen den Kommunikationseinheiten (110) zuzuführen; wobei der Vektorisierungsprozessor ferner dazu ausgelegt ist, stromaufwärtige Tondaten (143, 144) und verknüpfte verzögerte vorkompensierte stromabwärtige Tondaten (142), die zuvor vom Vektorisierungsprozessor zugeführt wurden, von den Kommunikationseinheiten zu empfangen und die stromaufwärtigen Tondaten mit den verzögerten vorkompensierten stromabwärtigen Tondaten für ein Nahübersprechen, NEXT (123), und für ein stromaufwärtiges Fernübersprechen, US-FEXT (122), nachzukompensieren (152), wodurch nachkompensierte stromaufwärtige Tondaten (145) erhalten werden, und die nachkompensierten Tondaten zur weiteren Demodulation den Kommunikationseinheiten zuzuführen.

2. Vektorisierungsprozessor (150) nach Anspruch 1, wobei die empfangenen stromaufwärtigen Tondaten (143) zur Echounterdrückung von den Kommunikationseinheiten mit den verzögerten vorkompensierten stromabwärtigen Tondaten (142) vorverarbeitet (115) werden.

3. Vektorisierungsprozessor (150) nach Anspruch 1, der ferner dazu ausgelegt ist, die stromaufwärtigen Tondaten (144) zur Echounterdrückung mit den verzögerten vorkompensierten stromabwärtigen Tondaten zu verarbeiten.

4. Vektorisierungsprozessor (150) nach Anspruch 1, wobei die verzögerten vorkompensierten stromabwärtigen Tondaten (142) vorkompensierten stromabwärtigen Tondaten (141), die durch eine Übertragungspipelineverzögerung (181) und eine Empfangspipelineverzögerung (184) verzögert werden, entsprechen, derart, dass die verzögerten vorkompensierten stromabwärtigen Tondaten und die stromaufwärtigen Tondaten (143) stromaufwärtigen und stromabwärtigen Tondaten, die gleichzeitig über die Übertragungsleitungen übertragen werden, entsprechen.

5. Vektorisierungsprozessor (150) nach einem der vorhergehenden Ansprüche, der ferner dazu ausgelegt ist, das DS-FEXT mittels einer Vorcodierungsmatrix (151) abzuschwächen.

6. Vektorisierungsprozessor (150) nach einem der Ansprüche 1 bis 5, der ferner dazu ausgelegt ist, das NEXT (123) mittels einer NEXT-Unterdrückungsmatrix (261, 361) abzuschwächen und das US-FEXT mittels einer US-FEXT-Nachcodierungsmatrix (262, 362) abzuschwächen.

7. Vektorisierungsprozessor (150) nach Anspruch 6, der ferner dazu ausgelegt ist, die US-FEXT-Nachcodierungsmatrix (262) auf die stromaufwärtigen Tondaten (143) anzuwenden, wodurch nachcodierte stromaufwärtige US-FEXT-Tondaten (246) erhalten werden, und die NEXT-Unterdrückungsmatrix (261) auf die verzögerten vorkompensierten stromabwärtigen Tondaten (142) anzuwenden, wodurch NEXT-Unterdrückungstondaten (247) erhalten werden, und die NEXT-Unterdrückungstondaten (247) mit den nachcodierten stromaufwärtigen US-FEXT-Tondaten (246) zu kombinieren, um die nachkompensierten stromaufwärtigen Tondaten (145) zu erhalten.

8. Vektorisierungsprozessor (150) nach Anspruch 6, der ferner dazu ausgelegt ist, die NEXT-Unterdrückungsmatrix (361) auf die verzögerten vorkompensierten stromabwärtigen Tondaten (142) anzuwenden, wodurch NEXT-Unterdrückungstondaten (347) erhalten werden, und die NEXT-Unterdrückungstondaten (347) mit den stromaufwärtigen Tondaten (143) zu kombinieren, wodurch stromaufwärtige NEXT-Unterdrückungstondaten (346) erhalten werden, und die US-FEXT-Nachcodierungsmatrix (362) auf die stromaufwärtigen NEXT-Unterdrückungstondaten (346) anzuwenden, um die nachkompensierten stromaufwärtigen Tondaten (145) zu erhalten.

9. Kommunikationsanordnung (100), die den Vektorisierungsprozessor (150) nach einem der Ansprüche 6 bis 8 und einen Prozessor (450), der dazu ausgelegt ist, die NEXT-Unterdrückungsmatrix (261, 361) und die US-FEXT-Nachcodierungsmatrix (262, 362) anhand von Kanalzustandsinformationen zu bestimmen, umfasst.

10. Kommunikationsanordnung (100) nach Anspruch 9, wobei der Prozessor (450) ferner dazu ausgelegt ist, die US-FEXT-Nachcodierungsmatrix (262) anhand einer Kanalmatrix (121), die Kopplungskoeffizienten zwischen stromaufwärtigen Kanaleingängen (149) und stromaufwärtigen Kanalausgängen (144), die mit den jeweiligen Übertragungsleitungen verknüpft sind, umfasst, zu berechnen.

11. Kommunikationsanordnung (100) nach Anspruch 9 oder 10, sofern von Anspruch 7 abhängig, wobei der Prozessor (450) ferner dazu ausgelegt ist, die NEXT-Unterdrückungsmatrix (261) anhand einer Kanalzustandsmatrix (123), die Kopplungskoeffizienten zwischen stromabwärtigen Kanaleingängen (141) und stromaufwärtigen Kanalausgängen (144), die mit den jeweiligen Übertragungsleitungen verknüpft sind, umfasst, und anhand der US-FEXT-Nachcodierungsmatrix zu berechnen.

12. Kommunikationsanordnung (100) nach Anspruch 9 oder 10, sofern von Anspruch 8 abhängig, wobei der Prozessor (450) ferner dazu ausgelegt ist, die NEXT-Unterdrückungsmatrix (361) anhand einer Kanalzustandsmatrix, die Kopplungskoeffizienten zwischen stromabwärtigen Kanaleingängen (141) und stromaufwärtigen Kanalausgängen (144), die mit den jeweiligen Übertragungsleitungen verknüpft sind, umfasst, zu berechnen.

13. Kommunikationsanordnung (100) nach Anspruch 10 und einem der Ansprüche 6 bis 9, wobei der Prozessor (450) ferner dazu ausgelegt ist, die Vorcodierungsmatrix (151) anhand einer Kanalmatrix (122), die Kopplungskoeffizienten zwischen stromabwärtigen Kanaleingängen (141) und stromabwärtigen Kanalausgängen (148), die mit den jeweiligen Übertragungsleitungen verknüpft sind, umfasst, zu berechnen.

14. Kommunikationseinheit (110), die eine bidirektionale Vollduplexkommunikation über eine Übertragungsleitung (414), die dazu ausgelegt ist, sich an einen Vektorisierungsprozessor (150) zum Abschwächen eines Übersprechens anzubinden, unterstützt; wobei die Kommunikation ferner dazu ausgelegt ist, stromabwärtige Tondaten (140) zur Vorkompensation eines stromabwärtigen Fernübersprechens, DS-FEXT (121) an den Vektorisierungsprozessor zu senden und daraufhin vorkompensierte stromabwärtige Tondaten (141) zur weiteren Übertragung auf der Übertragungsleitung vom Vektorisierungsprozessor zu empfangen; und wobei die Kommunikationseinheit ferner dazu ausgelegt ist, die vorkompensierten stromabwärtigen Tondaten zu speichern, wodurch verzögerte vorkompensierte stromabwärtige Tondaten (142) erhalten werden, und die verzögerten vorkompensierten stromabwärtigen Tondaten zusammen mit verknüpften stromaufwärtigen Tondaten (143, 144), die von der Übertragungsleitung empfangen werden, zur Kompensation der stromaufwärtigen Tondaten für ein Nahübersprechen, NEXT (123), und für ein stromaufwärtiges Fernübersprechen, US-FEXT (122) an den Vektorisierungsprozessor zu senden und daraufhin nachkompensierte stromaufwärtige Tondaten (145) zur weiteren Demodulation vom Vektorisierungsprozessor zu empfangen.

15. Kommunikationsanordnung (100), die eine Vielzahl von Kommunikationseinheiten nach Anspruch 14 und den Vektorisierungsprozessor nach einem der Ansprüche 1 bis 13 umfasst.

## Revendications

1. Processeur de vectorisation (150) pour atténuer une diaphonie (121, 122, 123) ; dans lequel le processeur de vectorisation est configuré pour s'interfacer avec une pluralité d'unités de communication (110) prenant en charge une communication bidirectionnelle en duplex intégral sur des lignes de transmission (414) respectives ; dans lequel le processeur de vectorisation est en outre configuré pour pré-compenser (151) des données de tonalité aval (140) reçues à partir des unités de communication pour une diaphonie d'extrémité éloignée aval (121), DS-FEXT, obtenant ainsi des données de tonalité aval (141) pré-compensées, et pour fournir les données de tonalité aval pré-compensées aux unités de communication (110) pour une transmission supplémentaire sur les lignes de transmission respectives ; dans lequel le processeur de vectorisation est en outre configuré pour recevoir, à partir des unités de communication, des données de tonalité amont (143, 144) et des données de tonalité aval (142) pré-compensées retardées associées précédemment fournies par le processeur de vectorisation, et pour post-compenser (152) les données de tonalité amont, avec les données de tonalité aval pré-compensées retardées, pour une diaphonie d'extrémité proche (123), NEXT, et pour une diaphonie d'extrémité éloignée amont (122), US-FEXT, obtenant ainsi des données de tonalité amont (145) post-compensées, et pour fournir les données de tonalité amont post-compensées aux unités de communication pour une démodulation supplémentaire.

2. Processeur de vectorisation (150) selon la revendication 1, dans lequel les données de tonalité amont (143) reçues sont prétraitées (115) par les unités de communication pour une annulation d'écho avec les données de tonalité aval (142) pré-compensées retardées.

3. Processeur de vectorisation (150) selon la revendication 1, configuré en outre pour traiter les données de tonalité amont (144) pour une annulation d'écho avec les données de tonalité aval pré-compensées retardées.

4. Processeur de vectorisation (150) selon la revendication 1, dans lequel les données de tonalité aval (142) pré-compensées retardées correspondent à des données de tonalité aval (141) pré-compensées retardées par un retard de pipeline de transmission (181) et un retard de pipeline de réception (184), de sorte que les données de tonalité aval pré-compensées retardées et les données de tonalité amont (143) correspondent à des données de tonalité amont et aval transmises simultanément sur les lignes de transmission.

5. Processeur de vectorisation (150) selon l'une quelconque des revendications précédentes, configuré en outre pour atténuer la DS-FEXT au moyen d'une matrice de pré-codage (151).

6. Processeur de vectorisation (150) selon l'une quelconque des revendications 1 à 5, configuré en outre pour atténuer la NEXT (123) au moyen d'une matrice d'annulation de NEXT (261, 361) et pour atténuer l'US-FEXT au moyen d'une matrice de post-codage d'US-FEXT (262, 362).

7. Processeur de vectorisation (150) selon la revendication 6, configuré en outre pour appliquer la matrice de post-codage d'US-FEXT (262) aux données de tonalité amont (143), obtenant ainsi des données de tonalité amont (246) post-codées d'US-FEXT, et pour appliquer la matrice d'annulation de NEXT (261) aux données de tonalité aval (142) pré-compensées retardées, obtenant ainsi des données de tonalité (247) d'annulation de NEXT, et pour combiner les données de tonalité (247) d'annulation de NEXT avec les données de tonalité amont (246) post-codées d'US-FEXT pour obtenir les données de tonalité amont (145) post-compensées.

8. Processeur de vectorisation (150) selon la revendication 6, configuré en outre pour appliquer la matrice d'annulation de NEXT (361) aux données de tonalité aval (142) pré-compensées retardées, obtenant ainsi des données de tonalité (347) d'annulation de NEXT, et pour combiner les données de tonalité (347) d'annulation de NEXT avec les données de tonalité amont (143), obtenant ainsi des données de tonalité amont (346) de NEXT annulée, et pour appliquer la matrice de post-codage d'US-FEXT (362) aux données de tonalité amont (346) de NEXT annulée pour obtenir les données de tonalité amont (145) post-compensées.

9. Agencement de communication (100) comprenant le processeur de vectorisation (150) selon l'une quelconque des revendications 6 à 8 et un processeur (450) configuré pour déterminer la matrice d'annulation de NEXT (261,361) et la matrice de post-codage d'US-FEXT (262, 362) à partir d'informations d'état de canal.

10. Agencement de communication (100) selon la revendication 9, dans lequel le processeur (450) est en outre configuré pour calculer la matrice de post-codage d'US-FEXT (262) à partir d'une matrice de canal (121) comprenant des coefficients de couplage entre des entrées de canal amont (149) et des sorties de canal amont (144) associées aux lignes de transmission respectives.

11. Agencement de communication (100) selon la revendication 9 ou 10, aussi longtemps qu'elles dépendent de la revendication 7, dans lequel le processeur (450) est en outre configuré pour calculer la matrice d'annulation de NEXT (261) à partir d'une matrice d'état de canal (123) comprenant des coefficients de couplage entre des entrées de canal aval (141) et des sorties de canal amont (144) associées aux lignes de transmission respectives, et à partir de la matrice de post-codage d'US-FEXT.

12. Agencement de communication (100) selon la revendication 9 ou 10, aussi longtemps qu'elles dépendent de la revendication 8 dans lequel le processeur (450) est en outre configuré pour calculer la matrice d'annulation de NEXT (361) à partir d'une matrice d'état de canal comprenant des coefficients de couplage entre des entrées de canal aval (141) et des sorties de canal amont (144) associées aux lignes de transmission respectives.

13. Agencement de communication (100) selon la revendication 10 et l'une quelconque des revendications 6 à 9, dans lequel le processeur (450) est en outre configuré pour calculer la matrice de pré-codage (151) à partir d'une matrice de canal (122) comprenant des coefficients de couplage entre des entrées de canal aval (141) et des sorties de canal aval (148) associées aux lignes de transmission respectives.

14. Unité de communication (110) prenant en charge une communication bidirectionnelle en duplex intégral sur une ligne de transmission (414) configurée pour s'interfacer avec un processeur de vectorisation (150) pour atténuer une diaphonie ; dans laquelle l'unité de communication est en outre configurée pour envoyer des données de tonalité aval (140) au processeur de vectorisation pour une pré-compensation de diaphonie d'extrémité éloignée aval (121), DS-FEXT, et pour recevoir alors, à partir du processeur de vectorisation, des données de tonalité aval (141) précompensées pour une transmission supplémentaire sur la ligne de transmission ; et dans laquelle l'unité de communication est en outre configurée pour stocker les données de tonalité aval pré-compensées, obtenant ainsi des données de tonalité aval (142) pré-compensées retardées, et pour envoyer les données de tonalité aval pré-compensées retardées avec les données de tonalité amont (143, 144) associées reçues à partir de la ligne de transmission au processeur de vectorisation pour une compensation des données de tonalité amont pour une diaphonie d'extrémité proche, NEXT (123), et pour une diaphonie d'extrémité éloignée amont (122), US-FEXT, et pour recevoir alors, à partir du processeur de vectorisation, des données de tonalité amont (145) post-compensées pour une démodulation supplémentaire.

**15.** Agencement de communication (100) comprenant une pluralité des unités de communication selon la revendication 14 et le processeur de vectorisation selon l'une quelconque des revendications 1 à 13.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013215935 A1

- EP 3113378 A1